# EUROPEAN PATENT SPECIFICATION

(11) **EP 3 223 596 B1**
(45) Date of publication and mention of the grant of the patent: **26.07.2023**
(21) Application number: 15794659.1
(22) Date of filing: 17.09.2015
(51) Int. Cl.: A01F 25/13, A01F 25/16

(54) **COVERING SYSTEM FOR COVERING A SPACE, FOR INSTANCE FOR STORING BULK MATERIALS, FOR INSTANCE SILAGE, MOUNTING MEANS FOR THE COVERING SYSTEM AND A METHOD FOR FORMING A COVERING SYSTEM FOR COVERING THE SPACE**
ABDECKSYSTEM ZUM ABDECKEN EINES RAUMES WIE Z. B. ZUM LAGERN VON SCHÜTTGUT WIE Z. B. SILOFUTTER, MONTAGEMITTEL FÜR DAS ABDECKSYSTEM UND VERFAHREN ZUR HERSTELLUNG EINES ABDECKSYSTEMS FÜR DEN RAUM
SYSTÈME DE COUVERTURE POUR RECOUVRIR UN ESPACE DESTINÉ, PAR EXEMPLE, AU STOCKAGE DE MATÉRIAUX EN VRAC, PAR EXEMPLE, DE FOURRAGE ENSILÉ, MOYENS DE MONTAGE POUR SYSTÈME DE COUVERTURE ET PROCÉDÉ POUR FORMER UN SYSTÈME DE COUVERTURE DESTINÉ À RECOUVRIR L'ESPACE

(30) Priority: 26.11.2014 NL 2013881
(43) Date of publication of application: 04.10.2017
(73) Proprietor: Brokers Covering B.V., 7651 DE Tubbergen (NL)
(72) Inventor: SCHROOTEN, Stephanus Gerardus Johannes, NL-7651 DE Tubbergen (NL); HEEZEN, Jan-Willem, 7442 AE Nijverdal (NL)
(74) Representative: Nederlandsch Octrooibureau
(86) International application number: PCT/NL2015/050641
(87) International publication number: WO 2016/085328

(56) References cited:
- WO-A1-2012/006673
- US-A- 989 624
- US-A- 3 857 210
- US-A- 3 991 718
- US-A- 4 041 654
- US-A- 4 691 957

## Description

The invention relates to a covering system for covering a space, for instance for storing bulk materials, for instance silage, which space is formed between two opposite walls, wherein the covering system comprises two or more sheets which are each configured to cover a part of the space, wherein the covering system comprises a number of winding shafts, mounting means for the winding shafts and fixing means, wherein each sheet is arranged on a winding shaft, each winding shaft is rotatably mountable on one of the walls by means of the mounting means such that in a rest position each sheet is wound round a winding shaft and in a position of use each sheet is at least partially unwound from a winding shaft and can be fixed to or close to the opposite wall using the fixing means.

Such a system is known from the international patent application WO-A1-2012/006673, which shows a covering system for covering a space for storage of bulk materials. The system of WO-A1-2012/006673 comprises a number of side wall modules, a number of which are equipped with a roller assembly. Each roller assembly comprises a roller around which a covering sheet can be wound between a stowed and an extended condition.

A drawback of the system of WO-A1-2012/006673 is that a complicated coupling system is required for mutual coupling of the covering sheets.

Another known covering system is applied for the purpose of storing animal feed for long-term use. Preparing animal feed for storage is referred to in the field as 'ensilage'. During ensilage a harvested product (for instance grass) is collected and placed in a heap (the silage heap or silage) between two opposite walls. The silage heap is pressed down firmly here. The silage heap is then covered airtightly with one or more layers of plastic. In order to properly secure the plastic, sand and soil are deposited thereon along the edges. The silage heap is then covered using the known covering system comprising one or more sheets for protection against animals and weather influences. Successive sheets partially overlap each other here. The sheets are held in place by ballast such as car tyres, sandbags, or the whole of the silage is covered with soil or sand.

The known covering system has the drawback that covering is highly labour-intensive. The separate sheets first each have to be positioned at the location and placed ready to be pulled over the space. After the separate sheets have been pulled over the space, ballast then has to be placed over the sheets.

Removal of each sheet is also labour-intensive, since the ballast on each sheet has to be removed separately.

The sheets of the known covering systems also become damaged and worn quickly because the sheets come to lie in a heap. Because the sheets lie in the open air and on the ground, all kinds of weed grow through the sheets and vermin crawls through the sheets.

It is an object of the invention to provide a covering system according to the preamble which at least partially obviates the above stated drawbacks. Another object of the invention is to simplify the system of WO-A1-2012/006673.

The inventive covering system has for this purpose the feature that successive sheets partially overlap each other in the position of use.

Because the successive sheets partially overlap each other, it is not necessary to provide a complicated coupling system for coupling adjacent sheets. The system according to the invention is hereby simpler than the system of WO-A1-2012/006673.

It is noted that it is not possible in the system of WO-A1-2012/006673 for adjacent sheets to partially overlap each other. The complicated coupling means are therefore required in this system.

Compared to the per se known system, each sheet is always at the correct position relative to the walls as a result of these technical measures, and a sheet need not be secured with ballast. Removal of each sheet is also less labour-intensive, since no ballast need be removed. The sheet can also be rolled up neatly so that it does not make contact with the ground.

Another advantage of the system according to the invention is that it is a modular system which can be applied by a user in simple manner by arranging the winding shafts on a wall of a storage space using the mounting means. The user can choose the number of winding shafts to be arranged in accordance with a length of his/her storage space or silo and in accordance with a width of each sheet. Each sheet preferably has a length such that the length is sufficient for a maximum width of usual storage spaces or silos. If the silo in question is narrower than the maximum length of the sheet, the sheet is partially unwound in its position of use.

Yet another advantage of the system according to the invention is that it is safe for the user. This is because the user need not climb onto the stack of bulk material or silage in order to arrange the sheets thereon, but the user can pull a free end of the sheet over the bulk material from the opposite wall using a rope or the like and fasten it to the opposite wall using the fixing means.

Yet another advantage of the system according to the invention is that the storage space can be left clear per sheet for the purpose of removing bulk material, for instance silage, from the storage space to a depth substantially corresponding to the width of a sheet. The remaining sheets need not be removed, so that the bulk material covered thereby can remain covered.

It is noted that the width of each sheet can be chosen as desired, for instance corresponding to a minimum depth for each time bulk material is to be removed from the storage space. A width lying between 1 and 4 metres, more particularly between 2 and 3 metres, has for instance been found suitable.

It is further noted that the sheets can be manufactured from any suitable material. The material is in particular sufficiently strong to withstand some tensile force and/or sufficiently sturdy to be resistant to animals such as birds, cows and/or small game and/or is UV-stable and/or is substantially flexible. The sheet can optionally be gas-tight and/or liquid-tight. Technical textile or geosynthetic material would be particularly suitable.

It is also noted that successive sheets in the longitudinal direction of the opposite walls are understood to mean adjoining or adjacent sheets. Successive or adjacent sheets can be fixed to the same wall of the two opposite walls or to different walls.

It is further noted that the overlap of adjacent sheets is achieved particularly in that adjacent winding shafts partially overlap each other in the longitudinal direction of the opposite walls, so that the at least partially unwound sheets arranged thereon partially overlap each other in the position of use. The winding shafts here extend substantially parallel to the longitudinal direction of the opposite walls.

In a preferred embodiment of the covering system according to the invention at least one of the mounting means is configured for rotatably mounting two outer ends of successive winding shafts directed toward each other. At least one of the mounting means is particularly configured for rotatably mounting two end zones of successive winding shafts which are directed toward each other and overlap each other with a determined overlap length. Mounting of the winding shafts on the wall is hereby hugely simplified, since only one mounting means is necessary to mount two shafts. These mounting means also ensure that the overlapping area between successive sheets is always constant, whereby the covering system minimizes the number of sheets in efficient manner. The overlap length with which the end zones overlap each other can be selected as desired. This overlap length is preferably selected such that the sheets wound thereon overlap each other with a suitable sheet overlap length in their unwound state.

It is noted that each winding shaft is supported here by two mounting means.

It is also noted that particularly the mounting means disposed at the end zones of the space can be configured for rotatably mounting one end of one winding shaft.

In another embodiment of the covering system according to the invention each mounting means preferably comprises attaching means for rotatably attaching one end zone of one winding shaft or for rotatably attaching two end zones of adjacent winding shafts. The attaching means can be embodied in any suitable manner. The attaching means can for instance comprise a receiving space, for instance an opening or recess, in which an end zone of a winding shaft can be rotatably received. The attaching means can alternatively comprise a protruding, pin-like element, which pin-like element can be connected to a winding shaft, for instance by arranging the pin-like element in a receiving space, such as a cavity, in the winding shaft.

In another embodiment of the covering system according to the invention the winding shafts are attached to the wall using the mounting means such that adjacent winding shafts are not disposed mutually in line. Because the winding shafts are not disposed mutually in line but conversely offset or shifted relative to each other, it is possible for the sheets wound onto the winding shafts to partially overlap each other in the position of use. Adjacent winding shafts can be disposed offset relative to each other here in any desired direction. Adjacent winding shafts can for instance be attached to the wall at a different height on and/or distance from the wall.

In the or another preferred embodiment of the covering system according to the invention at least one of the mounting means is preferably configured to attach successive winding shafts at different heights. Owing to this measure the mounting means makes better use of the space available on the wall. This measure also makes it possible for adjacent winding shafts mounted on the wall using this mounting means, and therefore the sheets wound thereon, to partially overlap each other. An advantage of a mounting means which determines the difference in height between adjacent sheets is that the height difference can preferably be chosen so as to be constant between each pair of adjacent sheets.

In the or another preferred embodiment of the covering system according to the invention at least one of the mounting means is preferably configured to attach successive winding shafts at different distances to the wall. A tight fit of successive sheets close to the mounting means is guaranteed by this technical measure. This measure also makes it possible for adjacent winding shafts mounted on the wall using this mounting means, and therefore the sheets wound thereon, to partially overlap each other. An advantage of a mounting means which determines the difference in distance to the wall of adjacent sheets is that the difference in distance can preferably be chosen so as to be constant between each pair of adjacent sheets.

In the or another preferred embodiment of the covering system according to the invention at least one of the mounting means comprises locking means for locking the rotation of each of the mounted winding shafts. Locking of the rotation is necessary in order to avoid a sheet not lying tightly over the space after it has been fixed to or close to the other wall on the free side using the fixing means.

At least one of the winding shafts is preferably provided for this purpose with a slot for arranging the sheet on the winding shaft and at least one of the locking means comprises a pin-hole connection for co-action with the slot.

The ensiled animal feed or silage will decrease in volume over time. A sheet will hereby come to lie less tightly over the space. In order to prevent this the fixing means in the covering system according to the invention are provided with tensioning means for tensioning the sheets. Each sheet can be pre-tensioned using the tensioning means. When the silage decreases in volume, this can be compensated by the pre-tensioning of the sheet. If this pre-tensioning is insufficient, the tensioning means can be operated by a user of the covering system to bring each sheet to the correct pre-tensioning again. It will therefore be apparent that tensioning is understood here to mean both pre-tensioning and re-tensioning.

The tensioning means for tensioning according to the invention can be used particularly in combination with winding up of the sheets. The sheets can thus be first wound up tightly and then further tensioned using the tensioning means.

In order to load each sheet in the same manner over the width thereof during pre-tensioning the tensioning means comprise tubular elements which can each be fixed to a sheet over the width of a sheet, and tensioning straps connected to the tubular element.

The tensioning means are preferably connected to the tubular elements some distance from the outer ends thereof. This makes it possible for adjacent sheets to partially overlap each other and provides a better load distribution on the tubular element.

The tubular element can for instance comprise connecting eyes or other connecting elements for connection to the tensioning means. The connecting eyes or other connecting elements can for instance be connected to the tubular element for displacement over the length thereof.

For simple and unambiguous mounting at least one of the mounting means preferably has a locating surface, this locating surface being intended for the purpose of locating a position on a wall. A locating surface can for instance comprise a peripheral edge which supports on an upper side of a wall.

The invention further relates to a method for forming a covering system for covering a space, for instance for storing bulk material, for instance silage, which space is formed between two opposite walls, wherein the space is covered with sheets partially overlapping each other, wherein the method comprises the following steps, to be performed in any suitable sequence, of:
a) winding each of the sheets onto winding shafts;
b) mounting each winding shaft on one of the walls using mounting means, wherein the longitudinal axis of the winding shaft runs parallel to the longitudinal axis of the wall;
c) unwinding each sheet from the winding shaft until the space has been sufficiently covered;
d) locking each winding shaft from which the sheet has been unwound in step c) using locking means;
e) fixing a free outer end of each sheet to or close to an opposite wall using fixing means.

In the method according to the invention each winding shaft is preferably mounted on the same wall in step b). Use can hereby be made of a mounting means according to an embodiment of the invention.

In the method according to the invention each successive winding shaft is preferably mounted at a different height in step b).

In the method according to the invention each successive winding shaft is preferably mounted on the wall at a different distance to the wall in step b).

In the method according to the invention, following fixing of a sheet to or close to an opposite wall, the sheet is preferably tensioned in step e) using tensioning means.

The method according to the invention preferably comprises the additional steps of:
step f) unlocking the winding shaft locked in step d), wherein the winding shaft is prevented from beginning to rotate;
step g) rotating the winding shaft in a direction in which the sheet arranged on the winding shaft is tensioned;
step h) locking the winding shaft unlocked in step f) using locking means.

The invention further relates to a silo comprising a space formed between two opposite walls, which space is for instance configured to store bulk material, for instance silage, the silo comprising a covering system for covering the space according to one or more of the above described embodiments, wherein the covering system comprises two one or more sheets which are each configured to cover a part of the space, wherein the covering system comprises a number of winding shafts, mounting means for the winding shafts and fixing means, wherein each sheet is arranged on a winding shaft and each winding shaft is mounted rotatably on one of the walls by means of the mounting means such that in a rest position each sheet is wound round a winding shaft and in a position of use each sheet is at least partially unwound from a winding shaft and can be fixed to or close to the opposite wall using the fixing means, characterized in that successive sheets partially overlap each other in the position of use.

The covering system can have one or more of the above elucidated features in any suitable and desired combination within the scope of the appended claims.

In an embodiment of the silo successive winding shafts are disposed offset relative to each other and overlap each other with a determined overlap length.

As elucidated above, it is hereby possible for the sheets wound onto the winding shafts to partially overlap each other with a sheet overlap length in the position of use.

In another embodiment of the silo successive winding shafts are fixed to the wall at a different height on and/or distance from the wall.

This is a practical embodiment in which successive winding shafts are not disposed mutually in line but conversely offset or shifted relative to each other.

The invention will be further elucidated with reference to the following figures, in which:
Figure 1 shows a cross-section of the known covering system in operative position;
Figure 2 shows a cross-section of a preferred embodiment of the covering system according to the invention;
Figure 3 shows a mounting means;
Figure 4 shows another view of the mounting means according to Figure 3;
Figure 5 shows a mounting means to which are attached two outer ends of successive winding shafts directed toward each other;
Figure 6 shows a part of a side view of the covering system according to the invention in mounted state on a wall, in which the winding shafts and mounting means are shown;
Figure 7 shows a part of a side view of the covering system according to the invention in mounted state on a wall, in which the tensioning means are shown;
Figures 8A-8E are perspective views of the covering system of figure 2, wherein figure 8A shows all sheets in rest position, figure 8B shows a number of sheets in rest position and a number of sheets in operative position, figure 8C shows a subsequent number of sheets being moved to the operative position, figure 8D shows all sheets in operative position and figure 8E shows the covering system in the operative position of figure 8D from an opposite tensioning side;
Figures 9A and 9B show a second embodiment of the covering system according to the invention, wherein figure 9A is a perspective view and figure 9B a front view. The same numerals designate the same components in the different figures.

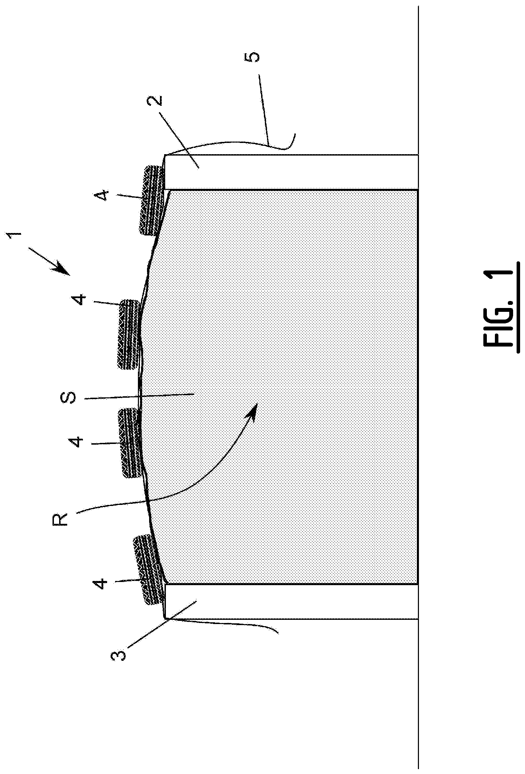

Figure 1 shows a cross-section of a known covering system 1 in operative position.

In this figure covering system 1 is applied for the purpose of covering a space R formed between two walls 2, 3. Space R is filled in the figure with silage S. The silage is closed airtightly from the upper side of space R using an airtight film. A plurality of sheets 5 is then arranged over the upper side of space R and on the outer sides of walls 2, 3. Sheets 5 are arranged in overlapping manner. Old car tyres 4 are placed on sheets 5. Car tyres 4 ensure that sheets 5 remain in place.

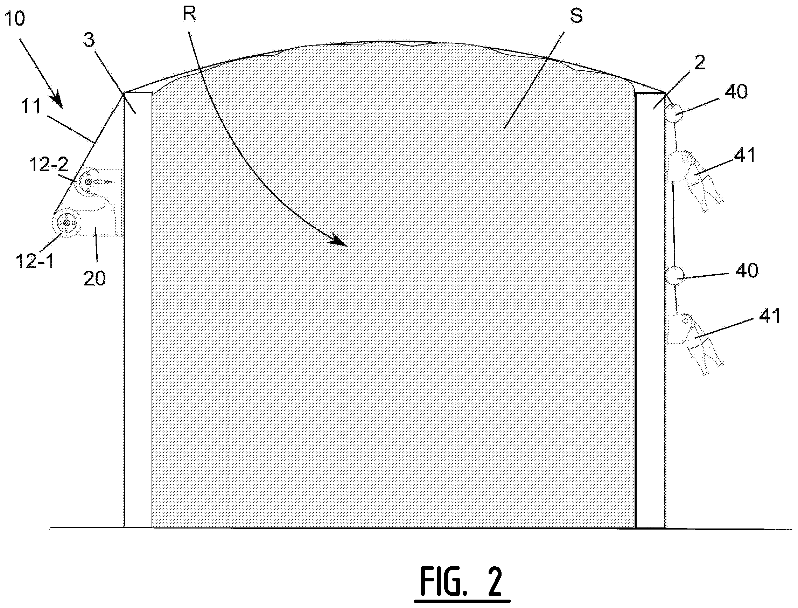

Figure 2 shows a cross-section of a preferred embodiment of covering system 10 according to the invention. Just as the known covering system, covering system 10 is suitable for covering space R formed between two opposite walls 2, 3. Space R is filled with silage S. Just as the known covering system, covering system 10 comprises two or more sheets 11. Each of the sheets 11 is configured to cover a part of space R. Sheets 11 extend here substantially transversely relative to the longitudinal direction of upright walls 2, 3. The successive or adjacent sheets 11 arranged over space R overlap each other partially in the longitudinal direction of sheets 11. Covering system 10 comprises a number of winding shafts (12-1, 12-2,...,12-n), mounting means 13 for winding shafts 12 and fixing means 40, 41. Each sheet 11 is arranged on a winding shaft 12, wherein each winding shaft 12 is arranged rotatably on wall 3 using mounting means 20. In the rest position of covering system 10 each sheet 11 is wound round a winding shaft 12. In a position of use each sheet 11 is at least partially unwound from a winding shaft 12 and fixed to or close to opposite wall 2 using fixing means 40, 41.

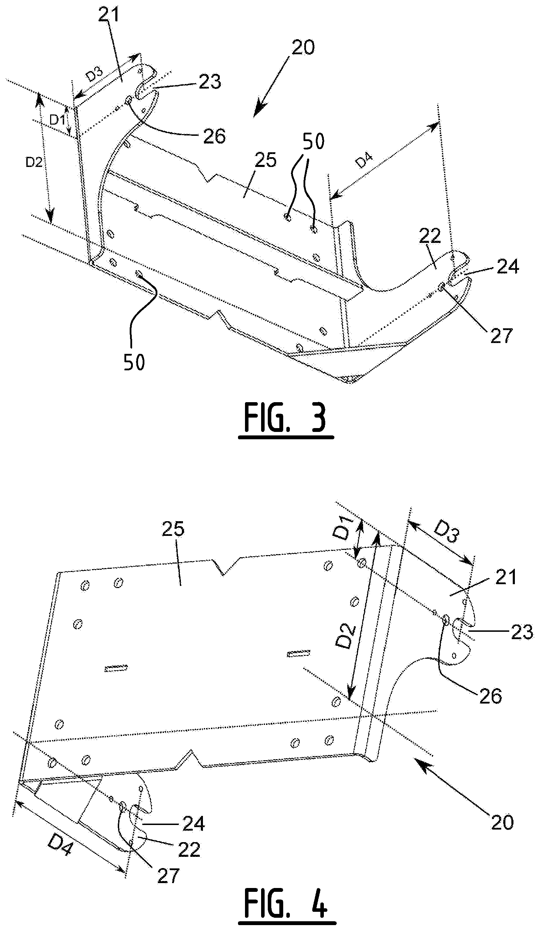

Figure 3 shows mounting means 20 according to the invention. Mounting means 20 is configured for rotatably attaching two outer ends or end zones of successive or adjacent winding shafts directed toward each other. Mounting means 20 comprises for this purpose two winding shaft holders 21 and 22 which are both provided with an opening or recess 23, 24 for passage of or for receiving an outer end or end zone of a winding shaft. Mounting means 20 also comprises a fixing plate 25 for fixing to a wall. Because openings 23 and 24 of the two winding shaft holders 21 and 22 are offset relative to each other, mounting means 20 is configured to attach successive winding shafts at different heights. This is made apparent in the figure with the different distances D1 and D2. Mounting means 20 is also configured to attach successive winding shafts at different distances from the wall. Openings 23, 24 are for this purpose arranged on winding shaft holders 21, 22 at a mutually differing distance D3, D4 from fixing plate 25.

Also arranged on mounting means 20 are holes 26 and 27 which form part of the pin-hole connection for locking the rotation of the winding shafts.

As shown in figure 3, the fixing plate is provided close to all corner zones thereof with three holes 50 in each case. Screws or bolts can be arranged in holes 50 for the purpose of fixing mounting means 20 to a wall. An advantage of three holes, one of which is disposed in each case at a different horizontal position and one at a different vertical position, is that, when one of the holes is in register with a reinforcement in the wall, the other holes 50 can be used to fix mounting means 20 to the wall.

Figure 4 shows another view of the mounting means according to Figure 3. The mounting means is shown here from a rear side of fixing plate 25.

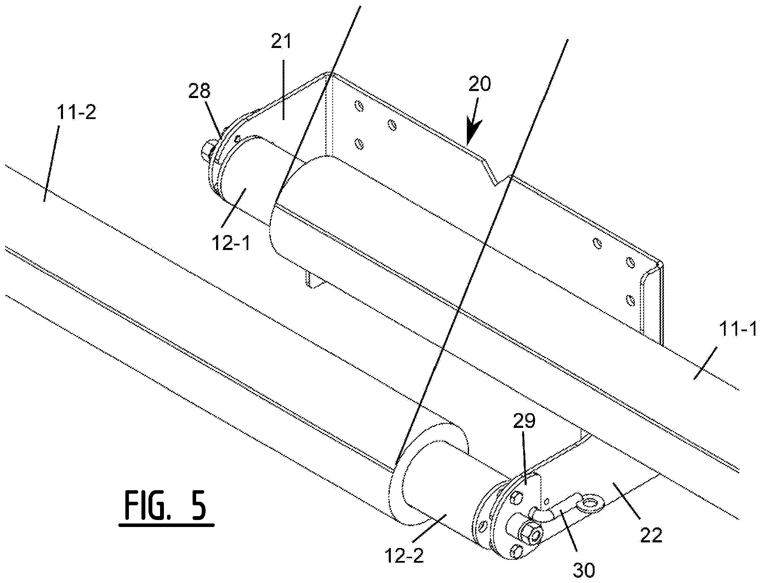

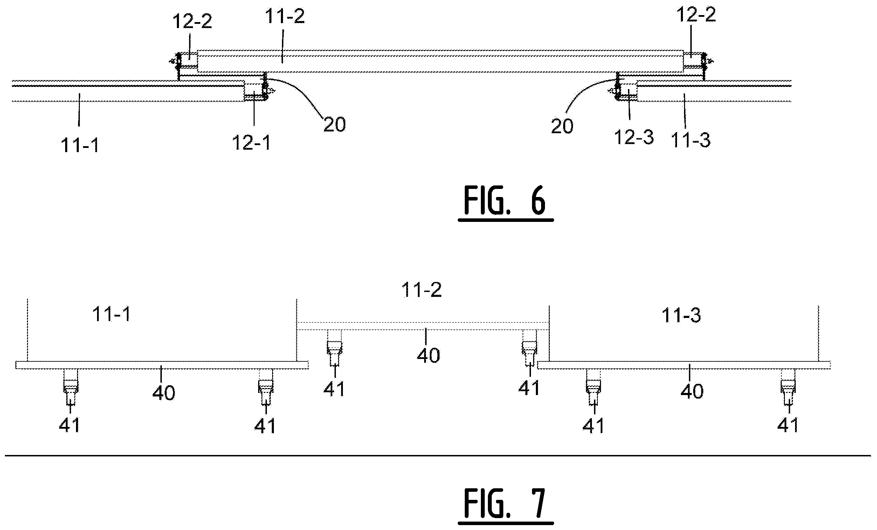

Figure 5 shows mounting means 20 to which are attached two outer ends or end zones of successive winding shafts 12-1, 12-2 directed toward each other. Sheets 11-1 and 11-2 are wound onto respective winding shafts 12-1, 12-2. The two sheets 11-1, 11-2 have been made transparent for the sake of clarity. This figure shows that, when both sheets 11-1, 11-2 are unwound, sheets 11-1, 11-2 partially overlap each other. This is because winding shafts 12-1, 12-2 partially overlap each other. The two winding shafts 12-1, 12-2 are retained in openings 23, 24 by means of closing plates 28, 29 which are arranged fixedly on winding shaft holders 21 and 22 using a screw connection. The rotation of winding shaft 12-2 can be locked by pin 30, which can be inserted into hole 27 via a corresponding hole in closing plate 29. Pin 30 co-acts here with a slot in winding shaft 12-2, which slot is also intended for passage of a thickened portion of sheet 11-2. Pin 30 can in addition also co-act with holes arranged in winding shaft 12-2. Winding shaft 12-1 can be locked in a similar manner. Figure 6 shows a part of a side view of covering system 10 in mounted state on a wall, wherein sheets 11-1, 11-2, 11-3, winding shafts 12-1, 12-2, 12-3 and mounting means 13 are shown. A covering system 10 wherein sheets 11-1, 11-2, 11-3 partially overlap in unwound state can thus be obtained in simple manner using mounting means 13.

Figure 7 shows a part of a side view of covering system 10 in mounted state on a wall 2 in which the tensioning means are shown. The tensioning means are formed by tubular elements 40 and tensioning straps 41. Each tubular element 40 can be fixed along the width of sheet 11, particularly at a free outer end thereof, preferably via a thickened portion-slot connection or by receiving a tubular element 40 in a hem of a sheet. Tensioning straps 41 are fixed to each of the tubular elements 40 and can further be coupled to an underside of wall 2. By applying tubular elements 40 the force exerted by tensioning straps 41 will be distributed uniformly over the width of tubular element 40 and, as a result, over sheet 11.

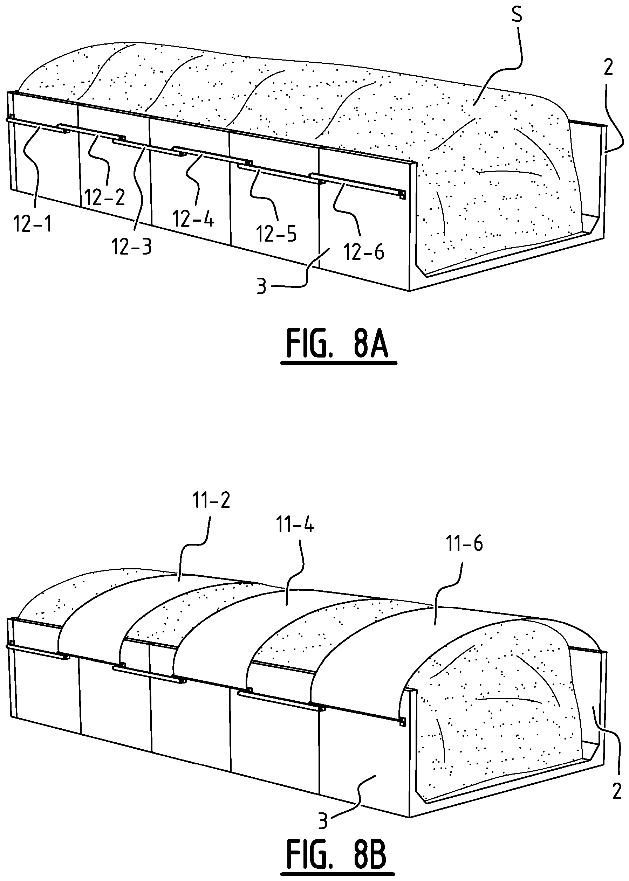

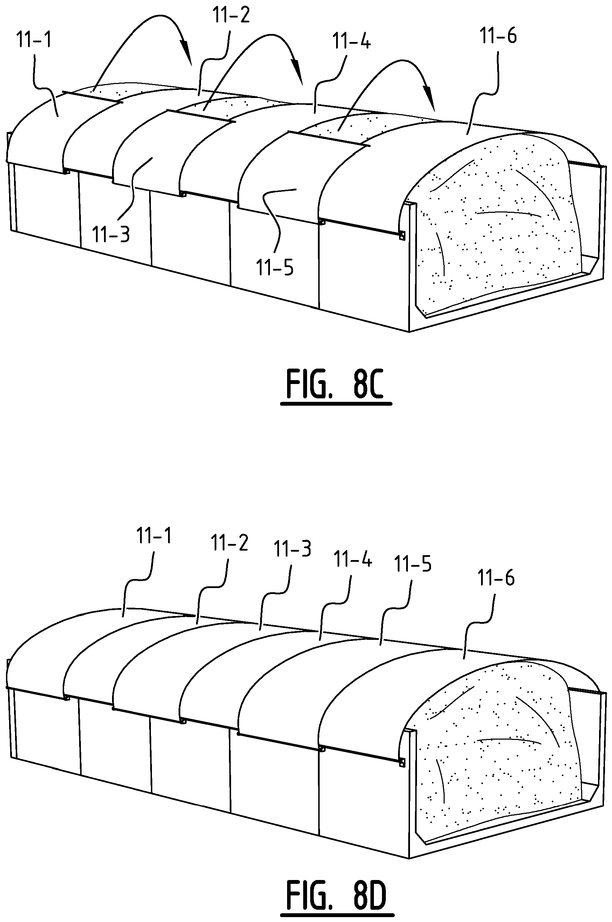

Figures 8A-8D show perspective views of covering system 10 according to the invention. In figure 8A the sheets are shown in wound-up state. In figure 8B a first part of the number of sheets 11 is unwound and fixed to the other wall 2. These are the sheets 11 of the higher winding shafts 12-2, 12-4 and 12-6, i.e. those attached closer to the upper side of wall 3. In figure 8C the sheets 11 are unwound from the lower winding shafts 12-1, 12-3 and 12-5, i.e. those disposed further away from the upper side of wall 3. These sheets 11 overlap the previously unwound sheets and therefore have to be unwound after them. Figure 8D shows all sheets 11 in their unwound state.

As shown in figures 8A-8D, space R is accessible from one side for the purpose of removing silage S stored in the space from the space from that side. When silage is taken out of space R, it is advantageous that sheet 11, which covers the silage to be taken out of space R, is wound up. The silage is in this way accessible from above so that it can be cut through or milled off. When this is a sheet 11 which is overlapped by another sheet, i.e. one of the sheets 11-2, 11-4 and 11-6, the overlapping sheet 11-1, 11-3 or 11-5 is wound up first or the tension thereon is released by further unwinding thereof or slackening the tensioning straps, after which the relevant sheet 11-2, 11-4 and 11-6 can be wound up. After the relevant sheet 11-2, 11-4 and 11-6 has been wound up, the previously wound-up or slackened sheet 11-1, 11-3 or 11-5 can be respectively unwound or tensioned so that this sheet 11-1, 11-3 or 11-5 covers the silage located thereunder.

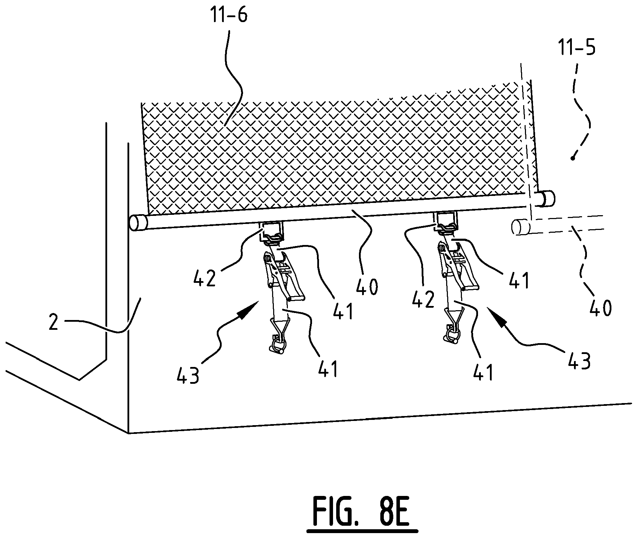

Figure 8E shows the tensioning side of the silo. Shown here is that, as described above, each sheet is provided at its free end with a tubular element 40. Provided about a third and two-thirds the way along from one outer end of the tubular element are fastening eyes 42 which are connected to one end of tensioning straps 41. Disposing fastening eyes 42 a third and two-thirds the way along the length of the tubular element ensures that successive sheets can overlap each other and that there is a good distribution of forces. The fastening eyes can be connected displaceably to tubular element 40 so that the location thereof is adjustable. Tensioning straps 41 are connected with their other end to wall 2. The sheets can be tensioned using tensioning straps 41 and ratchets 43 connected thereto.

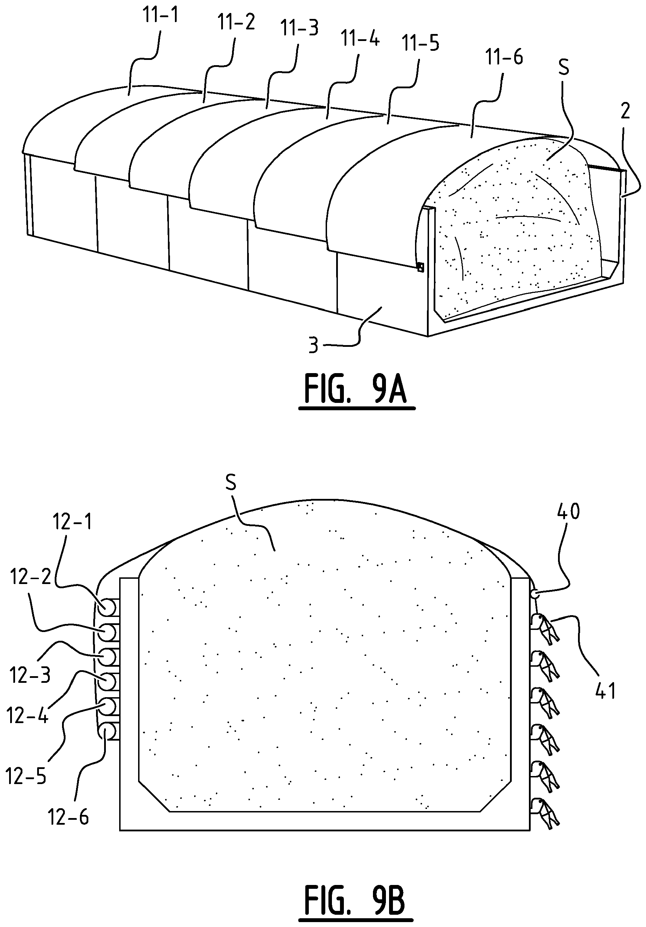

Figures 9A and 9B show a second embodiment of the covering system according to the invention. In this embodiment adjacent winding shafts 12-1 ... 12-6 are attached to wall 3 in successively lower position or successively further from the upper side of the wall. A subsequent sheet 11-x+1 can in each case hereby overlap a preceding sheet 11-x. An advantage hereof is that sheets 11 can be unwound and wound up in sequence. When sheets are wound up in order to leave clear a part of the silage it is hereby not necessary for another sheet to be wound up first or, conversely, to be unwound further, in order to allow it to hang loose. In this embodiment all winding shafts are attached to wall 3 at a substantially equal distance therefrom, and only the height differs. Fixing means 40, 41 are likewise each fixed at a different height to the other wall 2. These can alternatively be fixed at the same height.

It is noted expressly that the invention is not limited to the described and shown preferred embodiment. The invention extends generally to any embodiment which falls within the scope of the appended claims as seen in the light of the description and the accompanying drawings. It is thus not necessary for all mounting means to be mounted on one wall. The mounting means can for instance also be mounted alternately on the walls.

The covering system according to the invention is expressly not limited to covering a space for storage of silage. The covering system is suitable for covering any space formed between two walls disposed opposite each other.

## Claims

1. Covering system (10) for covering a space (R), for instance for storing bulk materials, for instance silage, which space is formed between two opposite walls (2, 3), wherein the covering system comprises two or more sheets (11) which are each configured to cover a part of the space, wherein the covering system comprises a number of winding shafts (12), mounting means (13) for the winding shafts and fixing means (40, 41), wherein each sheet is arranged on a winding shaft, each winding shaft is rotatably mountable on one of the walls by means (20) of the mounting means such that in a rest position each sheet is wound round a winding shaft and in a position of use each sheet is at least partially unwound from a winding shaft and can be fixed to or close to the opposite wall using the fixing means,
**characterized in that** successive sheets partially overlap each other in the position of use.

2. Covering system (10) as claimed in claim 1, wherein at least one of the mounting means (20) is configured for rotatably mounting two outer ends of successive winding shafts directed toward each other.

3. Covering system (10) as claimed in claim 2, wherein at least one of the mounting means (20) is configured to attach successive winding shafts at different heights.

4. Covering system (10) as claimed in claim 2 or 3, wherein at least one of the mounting means (20) is configured to attach successive winding shafts at different distances to the wall.

5. Covering system (10) as claimed in any of the claims 2 to 4, wherein at least one of the mounting means comprises locking means (26, 27, 30) for locking the rotation of each of the mounted winding shafts.

6. Covering system (10) as claimed in claim 5, wherein at least one of the winding shafts is provided with a slot for arranging the sheet on the winding shaft and at least one of the locking means comprises a pin-hole connection for co-action with the slot.

7. Covering system (10) as claimed in any of the foregoing claims, wherein the fixing means are provided with tensioning means (40, 41) for tensioning the sheets (11).

8. Covering system (10) as claimed in claim 7, wherein the tensioning means are formed by a tubular element (40) which can be fixed to a sheet over the width of a sheet, and tensioning straps (41) connected to the tubular element.

9. Covering system (10) as claimed in any of the foregoing claims, wherein at least one of the mounting means comprises a locating surface, this locating surface being intended for the purpose of locating a position on a wall.

10. Method for forming a covering system (10) for covering a space, for instance for storing bulk material, for instance silage, which space is formed between two opposite walls (2, 3), wherein the space is covered with overlapping sheets (11), wherein the method comprises the following steps, to be performed in any suitable sequence, of
a) winding each of the sheets onto winding shafts;
b) mounting each winding shaft on one of the walls using mounting means, wherein the longitudinal axis of the winding shaft runs parallel to the longitudinal axis of the wall, wherein preferably each successive winding shaft is mounted at a different height, wherein preferably each successive winding shaft is mounted on the wall at a different distance to the wall;
c) unwinding each sheet from the winding shaft until the space has been sufficiently covered;
d) locking each winding shaft from which the sheet has been unwound in step c) using locking means;
e) fixing a free outer end of each sheet to or close to an opposite wall using fixing means.

11. Method as claimed in claim 10, wherein in step b) each winding shaft is mounted on the same wall.

12. Method as claimed in any of the claims 10 to 11, wherein, following fixing of a sheet to or close to an opposite wall, the sheet is tensioned in step e) using tensioning means.

13. Method as claimed in any of the claims 10 to 12, wherein comprising the additional steps of:
step f) unlocking the winding shaft locked in step d), wherein the winding shaft is prevented from beginning to rotate;
step g) rotating the winding shaft in a direction in which the sheet arranged on the winding shaft is tensioned;
step h) locking 5 the winding shaft unlocked in step f) using locking means.

14. Silo, comprising a space formed between two opposite walls, which space is for instance configured to store bulk material, for instance silage, the silo comprising a covering system for covering the space as claimed in any of the foregoing claims 1-9, wherein the covering system comprises two or more sheets which are each configured to cover a part of the space, wherein the covering system comprises a number of winding shafts, mounting means for the winding shafts and fixing means, wherein each sheet is arranged on a winding shaft and each winding shaft is mounted rotatably on one of the walls by means of the mounting means such that in a rest position each sheet is wound round a winding shaft and in a position of use each sheet is at least partially unwound from a winding shaft and can be fixed to or close to the opposite wall using the fixing means, **characterized in that** successive sheets partially overlap each other in the position of use, wherein preferably successive winding shafts are disposed offset relative to each other and overlap each other with a determined overlap length, wherein preferably successive winding shafts are attached to the wall at a different height on and/or distance from the wall.

## Patentansprüche

1. Abdecksystem (10) zum Abdecken eines Raumes (R), beispielsweise zum Lagern von Schüttgut, beispielsweise Silage, wobei der Raum zwischen zwei gegenüberliegenden Wänden (2, 3) gebildet ist, wobei das Abdecksystem zwei oder mehr Folien (11) umfasst, die jeweils konfiguriert sind, um einen Teil des Raumes abzudecken, wobei das Abdecksystem eine Anzahl von Wickelwellen (12), Montagemittel (13) für die Wickelwellen und Befestigungsmittel (40, 41) umfasst, wobei jede Folie auf einer Wickelwelle angeordnet ist, jede Wickelwelle durch Mittel (20) der Montagemittel drehbar an einer der Wände montiert werden kann, so dass in einer Ruheposition jede Folie um eine Wickelwelle gewickelt ist und in einer Gebrauchsposition jede Folie zumindest teilweise von einer Wickelwelle abgewickelt ist und an oder nahe der gegenüberliegenden Wand unter Verwenden der Befestigungsmittel befestigt werden kann,
**gekennzeichnet dadurch, dass** sich aufeinanderfolgende Folien in der Gebrauchsposition teilweise überlappen.

2. Abdecksystem (10) nach Anspruch 1, wobei mindestens eines der Montagemittel (20) konfiguriert ist, um zwei Außenenden der aufeinanderfolgenden, zueinander gerichteten Wickelwellen drehbar zu montieren.

3. Abdecksystem (10) nach Anspruch 2, wobei mindestens eines der Montagemittel (20) konfiguriert ist, um aufeinanderfolgende Wickelwellen in unterschiedlichen Höhen zu befestigen.

4. Abdecksystem (10) nach Anspruch 2 oder 3, wobei mindestens eines der Montagemittel (20) konfiguriert ist, um aufeinanderfolgende Wickelwellen in unterschiedlichen Abständen an der Wand zu befestigen.

5. Abdecksystem (10) nach einem der Ansprüche 2 bis 4, wobei mindestens eines der Montagemittel Verriegelungsmittel (26, 27, 30) zum Verriegeln der Drehung jeder der montierten Wickelwellen umfasst.

6. Abdecksystem (10) nach Anspruch 5, wobei mindestens eine der Wickelwellen mit einem Schlitz zum Anordnen der Folie auf der Wickelwelle versehen ist und mindestens eines der Verriegelungsmittel eine Pin-Loch-Verbindung zum Zusammenwirken mit dem Schlitz umfasst.

7. Abdecksystem (10) nach einem der vorhergehenden Ansprüche, wobei die Befestigungsmittel mit Spannmitteln (40, 41) zum Spannen der Folien (11) versehen sind.

8. Abdecksystem (10) nach Anspruch 7, wobei die Spannmittel durch ein rohrförmiges Element (40), das an einer Folie über die Breite einer Folie befestigt werden kann, und Spannbänder (41) gebildet sind, die mit dem rohrförmigen Element verbunden sind.

9. Abdecksystem (10) nach einem der vorhergehenden Ansprüche, wobei mindestens eines der Montagemittel eine Auflageoberfläche umfasst, wobei diese Auflageoberfläche dazu bestimmt ist, eine Position an einer Wand zu lokalisieren.

10. Verfahren zum Bilden eines Abdecksystems (10) zum Abdecken eines Raumes, beispielsweise zum Lagern von Schüttgut, beispielsweise Silage, wobei der Raum zwischen zwei gegenüberliegenden Wänden (2, 3) gebildet ist, wobei der Raum mit überlappenden Folien (11) abgedeckt wird, wobei das Verfahren die folgenden Schritte umfasst, die in einer geeigneten Sequenz auszuführen sind:
a) Wickeln jeder der Folien auf Wickelwellen;
b) Montieren jeder Wickelwelle an einer der Wände unter Verwenden von Montagemitteln, wobei die Längsachse der Wickelwelle parallel zu der Längsachse der Wand verläuft, wobei vorzugsweise jede aufeinanderfolgende Wickelwelle in einer unterschiedlichen Höhe montiert wird, wobei vorzugsweise jede aufeinanderfolgende Wickelwelle an der Wand in einem unterschiedlichen Abstand zu der Wand montiert wird;
c) Abwickeln jeder Folie von der Wickelwelle, bis der Raum ausreichend bedeckt ist;
d) Verriegeln jeder Wickelwelle, von der die Folie in Schritt c) abgewickelt wurde, unter Verwenden von Verriegelungsmitteln;
e) Befestigen eines freien Außenendes jeder Folie an oder nahe einer gegenüberliegenden Wand unter Verwenden von Befestigungsmitteln.

11. Verfahren nach Anspruch 10, wobei in Schritt b) jede Wickelwelle an derselben Wand montiert wird.

12. Verfahren nach einem der Ansprüche 10 bis 11, wobei nach dem Befestigen einer Folie an oder nahe einer gegenüberliegenden Wand die Folie in Schritt e) unter Verwenden von Spannmitteln gespannt wird.

13. Verfahren nach einem der Ansprüche 10 bis 12, wobei es die folgenden zusätzlichen Schritte umfasst:
Schritt f) Entriegeln der in Schritt d) verriegelten Wickelwelle, wobei verhindert wird, dass sich die Wickelwelle zu drehen beginnt;
Schritt g) Drehen der Wickelwelle in eine Richtung, in die die auf der Wickelwelle angeordnete Folie gespannt ist;
Schritt h) Verriegeln 5 der in Schritt f) entriegelten Wickelwelle unter Verwenden von Verriegelungsmitteln.

14. Silo, das einen Raum umfasst, der zwischen zwei gegenüberliegenden Wänden gebildet ist, wobei der Raum beispielsweise konfiguriert ist, um Schüttgut zu lagern, beispielsweise Silage, wobei das Silo ein Abdecksystem zum Abdecken des Raumes nach einem der vorhergehenden Ansprüche 1-9 umfasst, wobei das Abdecksystem zwei oder mehr Folien umfasst, die jeweils konfiguriert sind, um einen Teil des Raumes abzudecken, wobei das Abdecksystem eine Anzahl von Wickelwellen, Montagemittel für die Wickelwellen und Befestigungsmittel umfasst, wobei jede Folie auf einer Wickelwelle angeordnet ist und jede Wickelwelle an einer der Wände mittels der Montagemittel drehbar montiert ist, so dass in einer Ruheposition jede Folie um eine Wickelwelle gewickelt ist und in einer Gebrauchsposition jede Folie zumindest teilweise von einer Wickelwelle abgewickelt ist und an oder nahe der gegenüberliegenden Wand unter Verwenden der Befestigungsmittel befestigt werden kann, **gekennzeichnet dadurch, dass** sich aufeinanderfolgende Folien in der Gebrauchsposition teilweise überlappen, wobei vorzugsweise aufeinanderfolgende Wickelwellen zueinander versetzt angeordnet sind und sich mit einer bestimmten Überlappungslänge überlappen, wobei vorzugsweise aufeinanderfolgende Wickelwellen an der Wand in einer unterschiedlichen Höhe an und/oder Entfernung von der Wand befestigt sind.

## Revendications

1. Système de couverture (10) pour couvrir un espace (R), par exemple pour stocker des matériaux en vrac, par exemple de l'ensilage, cet espace est formé entre deux parois opposées (2, 3), où le système de couverture comprend deux ou plusieurs bâches (11) qui sont chacune configurées pour couvrir une partie de l'espace, où le système de couverture comprend un nombre d'arbres d'enroulement (12), des moyens de montage (13) pour les arbres d'enroulement et des moyens de fixation (40, 41), où chaque bâche est disposée sur un arbre d'enroulement, chaque arbre d'enroulement est montable de façon rotative sur l'une des parois au moyen (20) des moyens de montage de sorte qu'en position de repos chaque bâche est enroulée autour d'un arbre d'enroulement et qu'en position d'utilisation chaque bâche est au moins partiellement déroulée d'un arbre d'enroulement et peut être fixée à ou à proximité de la paroi opposée à l'aide des moyens de fixation,
**caractérisé en ce que** des bâches successives se chevauchent partiellement en position d'utilisation.

2. Système de couverture (10) selon la revendication 1, où au moins l'un des moyens de montage (20) est configuré pour monter de façon rotative deux extrémités extérieures d'arbres d'enroulement successifs dirigés l'un vers l'autre.

3. Système de couverture (10) selon la revendication 2, où au moins l'un des moyens de montage (20) est configuré pour fixer des arbres d'enroulement successifs à des hauteurs différentes.

4. Système de couverture (10) selon la revendication 2 ou 3, où au moins l'un des moyens de montage (20) est configuré pour fixer des arbres d'enroulement successifs à distances différentes de la paroi.

5. Système de couverture (10) selon l'une quelconque des revendications 2 à 4, où au moins l'un des moyens de montage comprend des moyens de verrouillage (26, 27, 30) pour verrouiller la rotation de chacun des arbres d'enroulement montés.

6. Système de couverture (10) selon la revendication 5, où au moins l'un des arbres d'enroulement est pourvu d'une fente pour disposer la bâche sur l'arbre d'enroulement et au moins l'un des moyens de verrouillage comprend une connexion à trou d'épingle pour coopérer avec la fente.

7. Système de couverture (10) selon l'une quelconque des revendications précédentes, où les moyens de fixation sont pourvus de moyens de tension (40, 41) pour tendre les bâches (11).

8. Système de couverture (10) selon la revendication 7, où les moyens de tension sont formés par un élément tubulaire (40) qui peut être fixé à une bâche sur la largeur d'une bâche, et des sangles de tension (41) reliées à l'élément tubulaire.

9. Système de couverture (10) selon l'une quelconque des revendications précédentes, où au moins l'un des moyens de montage comprend une surface de repérage, cette surface de repérage étant destinée à repérer une position sur une paroi.

10. Procédé pour former un système de couverture (10) pour couvrir un espace, par exemple pour stocker des matériaux en vrac, par exemple de l'ensilage, cet espace est formé entre deux parois opposées (2, 3), où l'espace est couvert par des bâches se chevauchant (11), où le procédé comprend les étapes suivantes, à effectuer dans n'importe quelle séquence appropriée, à :
a) enrouler chacune des bâches sur des arbres d'enroulement;
b) monter chaque arbre d'enroulement sur l'une des parois à l'aide des moyens de montage, où l'axe longitudinal de l'arbre d'enroulement est parallèle à l'axe longitudinal de la paroi, où de préférence chaque arbre d'enroulement successif est monté à une hauteur différente, où de préférence chaque arbre d'enroulement successif est monté sur la paroi à une distance différente de la paroi ;
c) dérouler chaque bâche de l'arbre d'enroulement jusqu'à ce que l'espace soit suffisamment couvert ;
d) verrouiller chaque arbre d'enroulement à partir duquel la bâche a été déroulée à l'étape c) à l'aide de moyens de verrouillage ;
e) fixer une extrémité extérieure libre de chaque bâche à ou à proximité d'une paroi opposée à l'aide de moyens de fixation.

11. Procédé selon la revendication 10, où à l'étape b) chaque arbre d'enroulement est monté sur la même paroi.

12. Procédé selon l'une quelconque des revendications 10 à 11, où, suite à la fixation d'une bâche à ou à proximité d'une paroi opposée, la bâche est tendue à l'étape e) à l'aide de moyens de tension.

13. Procédé selon l'une quelconque des revendications 10 à 12, comprenant les étapes supplémentaires de :
étape f) déverrouiller l'arbre d'enroulement verrouillé à l'étape d), où l'arbre d'enroulement est empêché de commencer à tourner ;
étape g) tourner l'arbre d'enroulement selon une direction dans laquelle la bâche disposée sur l'arbre d'enroulement est tendue ;
étape h) verrouillage 5 de l'arbre d'enroulement déverrouillé à l'étape 1) à l'aide des moyens de verrouillage.

14. Silo, comprenant un espace formé entre deux parois opposées, cet espace est par exemple configuré pour stocker des matériaux en vrac, par exemple de l'ensilage, le silo comprenant un système de couverture pour couvrir l'espace comme revendiqué selon l'une quelconque des revendications précédentes 1 à 9, où le système de couverture comprend deux ou plusieurs bâches qui sont chacune configurées pour couvrir une partie de l'espace, où le système de couverture comprend un nombre d'arbres d'enroulement, des moyens de montage pour les arbres d'enroulement et des moyens de fixation, où chaque bâche est disposée sur un arbre d'enroulement et chaque arbre d'enroulement est monté de façon rotative sur l'une des parois au moyen des moyens de montage de sorte qu'en position de repos chaque bâche est enroulée autour d'un arbre d'enroulement et qu'en position d'utilisation chaque bâche est au moins partiellement déroulée d'un arbre d'enroulement et peut être fixée à ou à proximité de la paroi opposée à l'aide des moyens de fixation, **caractérisé en ce que** des bâches successives se chevauchent partiellement en position d'utilisation, où de préférence des arbres d'enroulement successifs sont disposés de manière décalée les uns par rapport aux autres et se chevauchent le long d'une longueur de chevauchement déterminée, où de préférence des arbres d'enroulement successifs sont fixés à la paroi à une hauteur différente et/ou à une distance différente de la paroi.
